# EUROPEAN PATENT APPLICATION

(11) **EP 4 455 183 A1**
(43) Date of publication of application: **30.10.2024**
(21) Application number: 24169448.8
(22) Date of filing: 10.04.2024
(51) Int. Cl.: C08G 63/181, C08G 63/199

(54) **POLYMER, POLYMER DISPERSION, INK COMPOSITION AND PRINTING METHOD**

(30) Priority: 24.04.2023 EP 23169372
(71) Applicant: Canon Production Printing Holding B.V., 5914 HH Venlo (NL)
(72) Inventor: MARKIES, Peter R., 5914 HH Venlo (NL); SUILEN, Frederik L.E.M., 5914 HH Venlo (NL); TURKENBURG, Daniël H., 5914HH VENLO (NL); VAN DIJKMAN, Thomas F., 5914 HH VENLO (NL)
(74) Representative: Canon Production Printing IP Department

(57) **Abstract**

The present invention relates to a polymer. In particular, the present invention relates to a polyester polymer. The present invention further relates to a polymer dispersion and an ink composition prepared from said dispersion. The present invention further relates to a method for preparing said polymer, a method for preparing said polymer dispersion as well as a method for preparing said ink composition. In addition, the present invention relates to a printed product. The present invention further relates to a method for printing and to use of a polymer for preparing an ink composition.

## Description

The present invention relates to a polymer. In particular, the present invention relates to a polyester polymer. The present invention further relates to a polymer dispersion and an ink composition prepared from said dispersion. The present invention further relates to a method for preparing said polymer, a method for preparing said polymer dispersion as well as a method for preparing said ink composition. In addition, the present invention relates to a printed product. The present invention further relates to a method for printing and to use of a polymer for preparing an ink composition.

### Background of the invention

Polymers are widely used in preparing ink composition, such as latex ink compositions. The characteristics of the polymer used in the ink composition are of great influence to the characteristics of the ink composition. The characteristics of the polymer are determined to a large extent by the composition of the polymer. Therefore, it is important to use a suitable monomer or combination of monomers to prepare a polymer for use in an ink composition. The polymer and the ink prepared from said polymers need to meet a number of requirements. It is desired that the ink provides good print robustness. Therefore, the polymer preferably Tg of 35°C or higher. Further, it is preferred that the Tg of the polymer is not negatively influenced by co-solvents and/or surfactants present in the ink composition.

In case the ink is used to print food packaging, there are even more stringent requirements. An ink and a polymer for use in the ink must be indirect food contact compliant. The degradation products of the polymer should also be indirect food contact compliant. Preferably, the polymer is degradable, such as industrially composable. More preferably, the polymer is biodegradable.

It is therefore an object of the present invention to provide a polymer that has a Tg of at least 35°C, that is not negatively influenced by the co-solvents and/or surfactants present in the ink composition and that is indirect food contact compliant.

### Summary of the Invention

This object is achieved in a polyester prepared from 1,4-cyclohexanedicarboxylic acid, 1,4-cyclohexanedimethanol and isophthalic acid.

Polyester are polymers comprising repeating units coupled to one another via an ester (-C(=O)-O-) linkage. Polyesters can be prepared by a polycondensation reaction wherein monomers are reacted and volatile molecules, such as water, are released. Suitable monomers for forming a polyester include dicarboxylic acids, di-alcohols, acid anhydrides, esters of volatile alcohols, lactones and epoxides. The polyester according to the present invention is prepared from 1,4-cyclohexanedicarboxylic acid, 1,4-cyclohexanedimethanol and isophthalic acid.

1,4-cyclohexanedicarboxylic acid comprises a six-membered, non-aromatic ring. The component further comprises two carboxylic acid functional groups, which can react with a hydroxy functional group to form an ester functional group. 1,4-cyclohexanedimethanol also comprises a six-membered, non-aromatic ring. The component further comprises two hydroxy functional groups, which can react with a carboxylic acid group to form an ester functional group. The compound is also referred to as 1,4-Bis(hydroxymethyl)cyclohexane.

Isophthalic acid comprises a six-membered aromatic ring. The component further comprises two carboxylic acid functional groups, which can react with a hydroxy functional group to form an ester functional group.

1,4-cyclohexanedicarboxylic acid, 1,4-cyclohexanedimethanol and isophthalic acid are mentioned as permitted substances for packaging inks in the "SWISS ORDINANCE ON MATERIALS AND ARTICLES IN CONTACT WITH FOOD (SR 817.023.21)". Polyesters obtained from these monomers can be safely used for preparing inks that are used for printing food packages. Degradation products of the polyester may also be safe for use in food packaging.

Preferably, the polyester according to the present invention is prepared from a monomer mixture, the monomer mixture consisting essentially of 1,4-cyclohexanedicarboxylic acid, 1,4-cyclohexanedimethanol and isophthalic acid. The total content of 1,4-cyclohexanedicarboxylic acid, 1,4-cyclohexanedimethanol and isophthalic acid in the monomer mixture may be 95 wt% or higher, based on the total weight of the monomer mixture, preferably 97 wt% or higher, based on the total weight of the monomer mixture, more preferably 99 wt% or higher, based on the total weight of the monomer mixture. The monomer mixture may not comprise monomers other than 1,4-cyclohexanedicarboxylic acid, 1,4-cyclohexanedimethanol and isophthalic acid in an amount of 5 wt% or higher, based on the total weight of the monomer mixture, preferably 3 wt% or higher, based on the total weight of the monomer mixture, more preferably 1 wt% or higher, based on the total weight of the monomer mixture.

The polyester according to the present invention may be soluble in low-toxicity solvents, such as, but not limited to methylisobutylketone (MIBK), methylethylketone, methylacetate and ethylacetate. The polyester may further be biodegradable.

The polyester may have a glass transition temperature (Tg) of 35°C or higher. This relatively high Tg provides prints made with inks, comprising the polyester according to the present invention, with good print robustness.

When preparing the polyester according to the present invention, the reaction mixture may comprise further components in addition to the monomer mixture. For example, the reaction mixture may comprise one or solvents and one or more catalysts.

In an embodiment, the polyester may have a number-average molecular weight (Mₙ) in the range of 100 Da - 50 000 Da, preferably in the range of 2500 Da to 10000 Da.

In an embodiment, the stoichiometric ratio between 1,4-cyclohexanedicarboxylic acid and isophthalic acid is in the range of 10,000:1 to 3:1. The polyester may hence comprise more aliphatic rings than aromatic rings.

Preferably, the stoichiometric ratio between 1,4-cyclohexanedicarboxylic acid and isophthalic acid is in the range of 1,000:1 to 15:1, more preferably in the range of from 100:1 to 20:1.

A small amount of aromatic rings, in addition to aliphatic rings, may improve the solubility of the polyester in a number of solvents.

In an embodiment, an aqueous dispersion, comprising the polyester according to the present invention, is provided. In the dispersion, polyester particles may be dispersed in an aqueous medium. The aqueous medium may comprise water. Optionally, the aqueous medium may comprise a co-solvent in addition to water. Preferably, the co-solvent is indirect food contact compliant. The dispersion may further comprise additional components, such as a dispersant. The dispersion may be used as a starting material for preparing an ink composition.

In an embodiment, an ink composition is provided, the ink composition comprising the polyester according to the present invention.

The ink composition may comprise an aqueous medium. The aqueous medium may comprise water and optionally one or more co-solvents. The ink composition may further comprise a colorant. Preferably, the colorant may be a water-dispersible colorant, such as a water-dispersible pigment.

The ink composition may further comprise additional components, such as one or more surfactants, one or more humectants, one or more penetrants, one or more substrate conditioning agents, such as one or more waxes, one or more biocides or fungicides.

### Water-Dispersible Colorant

A water-dispersible colorant may be a pigment or a mixture of pigments, a dye or a mixture of dyes or a mixture comprising pigments and dyes, as long as the colorant is water-dispersible.

In the ink according to the present invention, a pigment is primarily used as a water-dispersible colorant in view of the weatherability, and, for the purpose of controlling color tone, a dye may be contained within the range not impairing the weatherability. The pigment is not particularly limited and may be suitably selected in accordance with the intended use.

Examples of the pigment usable in the present invention include those commonly known without any limitation, and either a water-dispersible pigment or an oil-dispersible pigment is usable.

The amount of colorant contained in the ink, as a solid content, is preferably 0.5 weight% to 15 weight%, more preferably 0.8 weight% to 10 weight%, and even more preferably between 1 weight% and 6 weight%. When the amount of the water-insoluble pigment is less than 0.5 weight%, the color developing ability and image density of the ink may degrade. When it is more than 15 weight%, unfavorably, the viscosity of the ink is increased, causing a degradation in ink ejection stability.

### Solvent

Water is cited as an environmentally friendly and hence desirable solvent. In the present invention, the content of water to the whole ink is preferably from 20 weight% to 80 weight%. It is more preferable that the content of water is from 30 weight% to 75 weight%, even more preferable from 40 weight% to 70 weight%.

### Co-solvent

As a solvent of the ink, for the purposes of improving the ejection property of the ink or adjusting the ink physical properties, the ink preferably contains a water soluble organic solvent in addition to water. As long as the effect of the present invention is not damaged, there is no restriction in particular in the type of the water soluble organic solvent. Examples of the water-soluble organic solvent are known in the art and include polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, ketones, alkyl acetates and ethylene carbonate.

### Surfactants

It is preferable that the ink of the present invention contains a surfactant in order to improve an ink ejection property and/or the wettability of the surface of a recording medium, and the image density and color saturation of the image formed and reducing white spots therein. Examples of surfactants for ink compositions are known in the art.

### Penetrant

The ink composition according to the present invention may optionally further contain a penetrant, which is a compound that promotes absorption of the ink composition in the print medium. The amount of the penetrant contained in the inkjet ink is from 0 weight% to 4.0 weight%, preferably from 0.1 weight% to 3.0 weight%, more preferably from 0.5 weight% to 2.0 weight%, relative to the total ink composition.

The ink composition may further comprise the polyester according to the present invention. The polyester may be dispersed in the ink composition. The polyester may function as a binder in the ink and may provide a printed image, prepared by applying the ink composition according to the present invention on a recording medium, with good print robustness.

In an aspect of the invention, a method for preparing a polyester is provided, the method comprising the steps of:
a. Providing monomers, the monomers being 1,4-cyclohexanedicarboxylic acid, 1,4-cyclohexanedimethanol and isophthalic acid;
b. Providing a catalyst;
c. Reacting the monomers under removal of water.

In step a, the monomers are provided. The monomers include 1,4-cyclohexanedicarboxylic acid, 1,4-cyclohexanedimethanol and isophthalic acid. The monomers may be provided in neat form or may be provided as a solution. The diacids and the diols may be mixed in stoichiometric amounts. Optionally, a small excess of one or two of the diacids may be used, or alternatively, a small excess of the diol may be used.

In an embodiment, the monomers provided are a monomer mixture, the monomer mixture consisting essentially of 1,4-cyclohexanedicarboxylic acid, 1,4-cyclohexanedimethanol and isophthalic acid.

In a further embodiment, the monomer mixture consists of 1,4-cyclohexanedicarboxylic acid, 1,4-cyclohexanedimethanol and isophthalic acid.

In step b, a catalyst is provided. The catalyst is preferably an acidic catalyst, such as a Lewis-acidic catalyst. Acidic catalysts suitable for catalyzing esterification reactions are known in the art.

Optionally, one or more solvents may be provided. The one or more solvents may be selected based on their boiling point and their ability to form an azeotrope with water. The use of solvents capable to form an azeotrope with water may facilitate the removal of water.

In step c, the reaction is performed. The reaction may be performed at elevated temperature. The temperature may be in the range of about 100°C to about 300°C, preferably in the range of 170°C to 280°C, more preferably in the range of from 200°C to 250°C. Optionally, the temperature may be increased in the course of the reaction. Optionally, the reaction may be performed under reduced pressure. Optionally, the pressure at the start of the reaction may be higher than the pressure at the end of the reaction.

At the end of the reaction, the polyester may be formed.

In a further aspect of the invention, a method for preparing an aqueous dispersion in accordance with the present invention is provided, the method comprising the steps of:
a. Providing a solution of the polyester according to the present invention in an organic solvent
b. Adding water to obtain a mixture;
c. Agitating the mixture;
d. Removing water.

In the method, in step a, a solution of the polyester in an organic solvent is provided. In principle, any solvent capable of dissolving the polyester may be used. Preferably, the solvent is a non-toxic solvent. The advantage of using a non-toxic solvent is that no traces of a toxic solvent may be present in the resulting aqueous dispersion and further products prepared from said dispersion, such as ink for printing food packages and food packages printed with said ink. Examples of non-toxic solvents include, but are not limited to methylisobutylketone (MIBK), methylethylketone, methylacetate and ethylacetate.

In step b of the method, water may be added to obtain a mixture. Optionally, further components may be added, such as, but not limited to, one or more bases, one or more dispersants and/or one or more surfactants.

In step c of the method, the mixture is agitated. Agitating the mixture may be done by suitable methods, including, but not limited to stirring the mixture, shaking the mixture and applying ultrasound to the mixture. The obtained mixture may be homogeneous or non-homogeneous.

In step d of the method, the solvent may be removed. Solvent may be removed by known methods, including but not limited to heating the mixture and or reducing the pressure. The resulting mixture is an aqueous dispersion of the polyester.

In a further aspect of the invention, a method for preparing an ink composition is provided, the method comprising the steps of:
a. Providing an dispersion in accordance with the present invention;
b. Providing a colorant;
c. Mixing the dispersion and the colorant.

In step a, the aqueous dispersion of the polyester may be provided. The aqueous dispersion may be prepared as described above.

In step b, a colorant may be provided. The colorant may be provided neat, in solution or as a dispersion. Optionally, further components may be provided. The aqueous dispersion of the polyester, the colorant and optionally the further components may be mixed to obtain an ink composition.

In a further aspect of the invention, a method for preparing a printed article is provided, the method comprising the steps of:
a. applying the ink composition in accordance with the present invention on an article.

The article may be any article that is suitable for being provided with an image by applying an ink composition. Optionally, the article may be an intermediate article that is later on post-processed to form a final article. For example, the article on which the ink is applied may be a piece of cardboard. The cardboard may be folded after application of the ink to form a box, such as a box for packaging food. Alternatively, the article may be a piece of paper, such as coated paper or non-coated paper. The piece of paper may be post-processed to form a bag, for example a bag for transporting food.

In step a, an ink composition in accordance with the present invention is applied The ink composition may be applied using a printer, for example an inkjet printer. Printers, including inkjet printers are known in the art.

In a further aspect of the invention, a printed article is provided, the printed article being prepared by the method in accordance with the present invention. The printed article can be obtained by using the above presented method for preparing a printed article.

In a further aspect of the invention, use of a polyester according to the present invention for preparing an ink composition is provided. The polyester according to the present invention may be used for preparing an ink composition. The polyester may be dispersed in the ink composition. When applied onto an article, the polyester may provide the ink layer with print robustness.

### Brief Description of the Drawings

The present invention will become more fully understood from the detailed description given herein below and accompanying schematical drawings which are given by way of illustration only and are not limitative of the invention, and wherein:
Fig. 1 shows a schematic representations of an inkjet printing system.
Fig. 2 shows a schematic representation of an inkjet marking device: A) and B) assembly of inkjet heads; C) detailed view of a part of the assembly of inkjet heads.

### Printing process

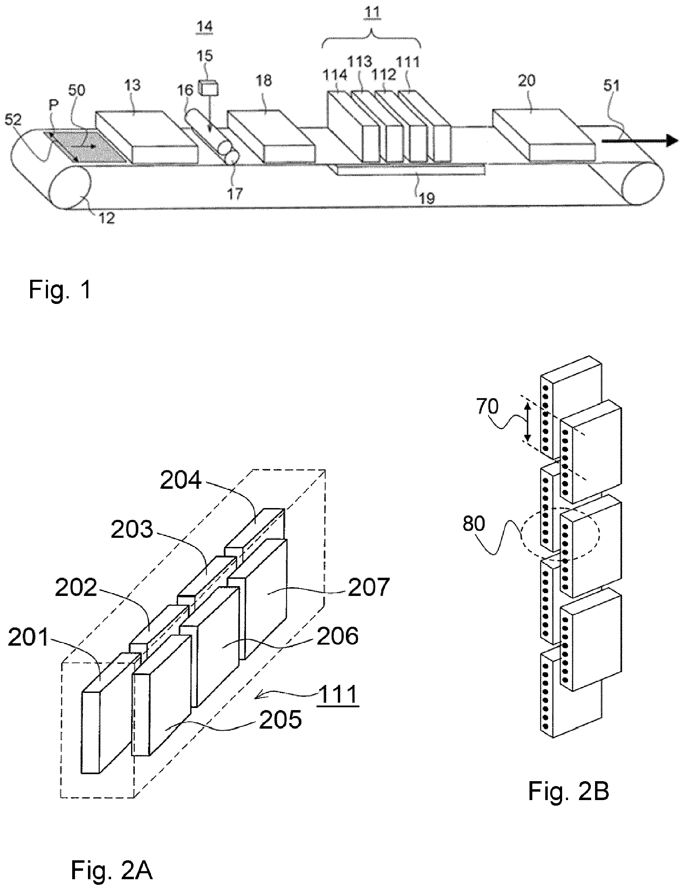

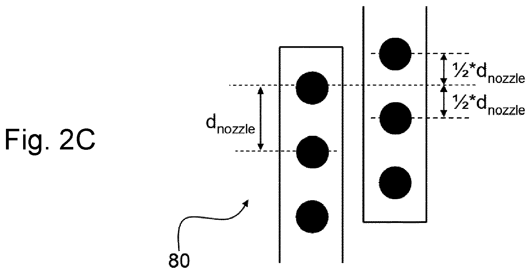

A printing process in which the inks according to the present invention may be suitably used is described with reference to the appended drawings shown in Fig. 1 and Fig. 2. Figs. 1 and 2 show schematic representations of an inkjet printing system and inkjet marking device, respectively.

Fig. 1 shows that a sheet of a receiving medium, in particular a machine coated or offset coated medium, P, is transported in a direction for conveyance as indicated by arrows 50 and 51 and with the aid of transportation mechanism 12. Transportation mechanism 12 may be a driven belt system comprising one (as shown in Fig. 1) or more belts.

Alternatively, one or more of these belts may be exchanged for one or more drums. A transportation mechanism may be suitably configured depending on the requirements (e.g. sheet registration accuracy) of the sheet transportation in each step of the printing process and may hence comprise one or more driven belts and/or one or more drums.

For a proper conveyance of the sheets of receiving medium, the sheets need to be fixed to the transportation mechanism. The way of fixation is not particularly limited and may be selected from electrostatic fixation, mechanical fixation (e.g. clamping) and vacuum fixation. Of these vacuum fixation is preferred.

The printing process as described below comprises of the following steps: media pre-treatment, image formation, drying and fixing and optionally post treatment.

### Media pre-treatment

To improve the spreading and pinning (i.e. fixation of pigments and water-dispersed polymer particles) of the ink on the receiving medium, in particular on slow absorbing media, such as machine coated or offset coated media, the receiving medium may be pretreated, i.e. treated prior to printing an image on the medium. The pre-treatment step may comprise one or more of the following:
- preheating of the receiving medium to enhance spreading of the used ink on the receiving medium and/or to enhance absorption of the used ink into the receiving medium;
- primer pre-treatment for increasing the surface tension of receiving medium in order to improve the wettability of the receiving medium by the used ink and to control the stability of the dispersed solid fraction of the ink composition (i.e. pigments and dispersed polymer particles). Primer pre-treatment may be performed in the gas phase, e.g. with gaseous acids such as hydrochloric acid, sulfuric acid, acetic acid, phosphoric acid and lactic acid, or in the liquid phase by coating the receiving medium with a pre-treatment liquid. The pre-treatment liquid may comprise water as a solvent, one or more cosolvents, additives such as surfactants and at least one compound selected from a polyvalent metal salt, an acid and a cationic resin (discussed in detail above);
- corona or plasma treatment.

### Primer pre-treatment

As an application way of the pre-treatment liquid, any conventionally known methods can be used. Specific examples of an application way include: a roller coating, an ink-jet application, a curtain coating and a spray coating. There is no specific restriction in the number of times with which the pre-treatment liquid is applied. It may be applied at one time, or it may be applied in two times or more. Application in two times or more may be preferable, since cockling of the coated printing paper can be prevented and the film formed by the surface pre-treatment liquid will produce a uniform dry surface having no wrinkle by applying in 2 steps or more.

Especially a roller coating (see 14 in Fig. 1) method is preferable because this coating method does not need to take into consideration of ejection properties and it can apply the aqueous pre-treatment liquid homogeneously to a recording medium. In addition, the amount of the applied pre-treatment liquid with a roller or with other means to a recording medium can be suitably adjusted by controlling: the physical properties of the pre-treatment liquid; and the contact pressure of a roller in a roller coater to the recording medium and the rotational speed of a roller in a roller coater which is used for a coater of the pre-treatment liquid. As an application area of the pre-treatment liquid, it may be possible to apply only to the printed portion, or to the entire surface of both the printed portion and the non-printed portion. However, when the pre-treatment liquid is applied only to the printed portion, unevenness may occur between the application area and a non-application area caused by swelling of cellulose contained in the coated printing paper with the water in the pre-treatment liquid followed by drying. Then, from the viewpoint of drying uniformly, it is preferable to apply a pre-treatment liquid to the entire surface of a coated printing paper, and roller coating can be preferably used as a coating method to the whole surface.

### Corona or plasma treatment

Corona or plasma treatment may be used as a pre-treatment step by exposing a sheet of a receiving medium to corona discharge or plasma treatment. In particular when used on media like polyethylene (PE) films, polypropylene (PP) films, polyethyleneterephtalate (PET) films and machine coated or offset coated media, the adhesion and spreading of the ink can be improved by increasing the surface energy of the media. With machine coated or offset coated media, the absorption of water can be promoted which may induce faster fixation of the image and less puddling on the receiving medium. Surface properties of the receiving medium may be tuned by using different gases or gas mixtures as medium in the corona or plasma treatment. Examples are air, oxygen, nitrogen, carbon dioxide, methane, fluorine gas, argon, neon and mixtures thereof. Corona treatment in air is most preferred.

Fig. 1 shows that the sheet of receiving medium P may be conveyed to and passed through a first pre-treatment module 13, which module may comprise a preheater, for example a radiation heater, a corona/plasma treatment unit, a gaseous acid treatment unit or a combination of any of the above. Optionally and subsequently, a predetermined quantity of the aqueous pre-treatment liquid is applied on the surface of the receiving medium P at aqueous pre-treatment liquid applying member 14. Specifically, the aqueous pre-treatment liquid is provided from storage tank 15 of the aqueous pre-treatment liquid to the aqueous pre-treatment liquid applying member 14 composed of double rolls 16 and 17. Each surface of the double rolls may be covered with a porous resin material such as a sponge. After providing the aqueous pre-treatment liquid to auxiliary roll 16 first, the aqueous pre-treatment liquid is transferred to main roll 17, and a predetermined quantity is applied on the surface of the receiving medium P. Subsequently, the coated printing paper P on which the aqueous pre-treatment liquid was supplied may optionally be heated and dried by drying member 18 which is composed of a drying heater installed at the downstream position of the aqueous pre-treatment liquid applying member 14 in order to decrease the quantity of the water content in the aqueous pre-treatment liquid to a predetermined range. It is preferable to decrease the water content in an amount of 1.0 weight% to 30 weight% based on the total water content in the provided pre-treatment liquid provided on the receiving medium P.

To prevent the transportation mechanism 12 being contaminated with pre-treatment liquid, a cleaning unit (not shown) may be installed and/or the transportation mechanism may be comprised multiple belts or drums as described above. The latter measure prevents contamination of the upstream parts of the transportation mechanism, in particular of the transportation mechanism in the printing region.

### Image formation

Image formation is performed in such a manner that, employing an inkjet printer loaded with inkjet inks, ink droplets are ejected from the inkjet heads based on the digital signals onto a print medium.

Although both single pass inkjet printing and multi pass (i.e. scanning) inkjet printing may be used for image formation, single pass inkjet printing is preferably used since it is effective to perform high-speed printing. Single pass inkjet printing is an inkjet recording method with which ink droplets are deposited onto the receiving medium to form all pixels of the image by a single passage of a receiving medium underneath an inkjet marking module.

In Fig. 1, 11 represents an inkjet marking module comprising four inkjet marking devices, indicated with 111, 112, 113 and 114, each arranged to eject an ink of a different color (e.g. Cyan, Magenta, Yellow and blacK). The nozzle pitch of each head is e.g. about 360 dpi. In the present invention, "dpi" indicates a dot number per 2.54 cm.

An inkjet marking device for use in single pass inkjet printing, 111, 112, 113, 114, has a length, L, of at least the width of the desired printing range, indicated with double arrow 52, the printing range being perpendicular to the media transport direction, indicated with arrows 50 and 51. The inkjet marking device may comprise a single printhead having a length of at least the width of said desired printing range. The inkjet marking device may also be constructed by combining two or more inkjet heads, such that the combined lengths of the individual inkjet heads cover the entire width of the printing range. Such a constructed inkjet marking device is also termed a page wide array (PWA) of printheads. Fig. 2A shows an inkjet marking device111 (112, 113, 114 may be identical) comprising 7 individual inkjet heads (201, 202, 203, 204, 205, 206, 207) which are arranged in two parallel rows, a first row comprising four inkjet heads (201 - 204) and a second row comprising three inkjet heads (205 - 207) which are arranged in a staggered configuration with respect to the inkjet heads of the first row. The staggered arrangement provides a page wide array of nozzles which are substantially equidistant in the length direction of the inkjet marking device. The staggered configuration may also provide a redundancy of nozzles in the area where the inkjet heads of the first row and the second row overlap, see 70 in Fig. 2B. Staggering may further be used to decrease the nozzle pitch (hence increasing the print resolution) in the length direction of the inkjet marking device, e.g. by arranging the second row of inkjet heads such that the positions of the nozzles of the inkjet heads of the second row are shifted in the length direction of the inkjet marking device by half the nozzle pitch, the nozzle pitch being the distance between adjacent nozzles in an inkjet head, d_{nozzle} (see Fig. 2C, which represents a detailed view of 80 in Fig. 2B). The resolution may be further increased by using more rows of inkjet heads, each of which are arranged such that the positions of the nozzles of each row are shifted in the length direction with respect to the positions of the nozzles of all other rows.

In image formation by ejecting an ink, an inkjet head (i.e. printhead) employed may be either an on-demand type or a continuous type inkjet head. As an ink ejection system, there may be usable either the electric-mechanical conversion system (e.g., a single-cavity type, a double-cavity type, a bender type, a piston type, a shear mode type, or a shared wall type), or an electric-thermal conversion system (e.g., a thermal inkjet type, or a Bubble Jet type (registered trade name)). Among them, it is preferable to use a piezo type inkjet recording head which has nozzles of a diameter of 30 µm or less in the current image forming method.

Fig. 1 shows that after pre-treatment, the receiving medium P is conveyed to upstream part of the inkjet marking module 11. Then, image formation is carried out by each color ink ejecting from each inkjet marking device 111, 112, 113 and 114 arranged so that the whole width of the receiving medium P is covered.

Optionally, the image formation may be carried out while the receiving medium is temperature controlled. For this purpose a temperature control device 19 may be arranged to control the temperature of the surface of the transportation mechanism (e.g. belt or drum) underneath the inkjet marking module 11. The temperature control device 19 may be used to control the surface temperature of the receiving medium P, for example in the range of 30°C to 60°C. The temperature control device 19 may comprise heaters, such as radiation heaters, and a cooling means, for example a cold blast, in order to control the surface temperature of the receiving medium within said range. Subsequently and while printing, the receiving medium P is conveyed to the down stream part of the inkjet marking module 11.

### Drying and fixing

After an image has been formed on the receiving medium, the prints have to be dried and the image has to be fixed onto the receiving medium. Drying comprises the evaporation of solvents, in particular those solvents that have poor absorption characteristics with respect to the selected receiving medium.

Fig. 1 schematically shows a drying and fixing unit 20, which may comprise a heater, for example a radiation heater. After an image has been formed, the print is conveyed to and passed through the drying and fixing unit 20. The print is heated such that solvents present in the printed image, to a large extent water, evaporate. The speed of evaporation and hence drying may be enhanced by increasing the air refresh rate in the drying and fixing unit 20. Simultaneously, film formation of the ink occurs, because the prints are heated to a temperature above the minimum film formation temperature (MFFT). The residence time of the print in the drying and fixing unit 20 and the temperature at which the drying and fixing unit 20 operates are optimized, such that when the print leaves the drying and fixing unit 20 a dry and robust print has been obtained. As described above, the transportation mechanism 12 in the fixing and drying unit 20 may be separated from the transportation mechanism of the pre-treatment and printing section of the printing apparatus and may comprise a belt or a drum.

### Post treatment

To increase the print robustness or other properties of a print, such as gloss level, the print may be post treated, which is an optional step in the printing process.

In an embodiment, the prints may be post treated by laminating the prints.

In an embodiment, the post-treatment step comprises a step of applying (e.g. by jetting) a post-treatment liquid onto the surface of the coating layer, onto which the inkjet ink has been applied, so as to form a transparent protective layer on the printed recording medium. In the post-treatment step, the post-treatment liquid may be applied over the entire surface of an image on the recording medium or may be applied only to specific portions of the surface of an image. The method of applying the post-treatment liquid is not particularly limited, and is selected from various methods depending on the type of the post-treatment liquid. However, the same method as used in the coating method of the pre-treatment liquid or an inkjet printing method is preferably used. Of these methods, inkjet printing method is particularly preferable in view of, avoiding contact between the printed image and the used post-treatment liquid applicator; the construction of an inkjet recording apparatus used; and the storage stability of the post-treatment liquid. In the post-treatment step, a post-treatment liquid containing a transparent resin is applied on the surface of a formed image so that a dry adhesion amount of the post-treatment liquid is 0.5 g/m² to 10 g/m², preferably 2 g/m² to 8 g/m², thereby forming a protective layer on the recording medium. When the dry adhesion amount is less than 0.5 g/m², almost no improvement in image quality (image density, color saturation, glossiness and fixability) is obtained. When the dry adhesion amount is more than 10 g/m², it is disadvantageous in cost efficiency, because the dryness of the protective layer degrades and the effect of improving the image quality is saturated.

As a post-treatment liquid, an aqueous solution comprising components capable of forming a transparent protective layer over a recording medium (e.g. a water-dispersible resin, a surfactant, water, and additives as required) is preferably used. The water-dispersible resin comprised in the post-treatment liquid, preferably has a glass transition temperature (T_{g}) of -30°C or higher, and more preferably in the range of -20°C to 100°C. The minimum film forming temperature (MFFT) of the water-dispersible resin is preferably 50°C or lower, and more preferably 35°C or lower. The water-dispersible resin may be radiation curable to improve the glossiness and fixability of the image.

As the water-dispersible resin, for example, an acrylic resin, a styrene-acrylic resin, a urethane resin, an acryl-silicone resin, a fluorine resin and the like are preferably used. The water-dispersible resin can be suitably selected from the same materials as that used for the inkjet ink. The amount of the water-dispersible resin contained, as a solid content, in the protective layer is preferably 1% by mass to 50% by mass.

The surfactant comprised in the post-treatment liquid is not particularly limited and may be suitably selected from those used in the inkjet ink. Examples of the other components of the post-treatment liquid include antifungal agents, antifoaming agents, and pH adjustors.

Hitherto, the printing process was described such that the image formation step was performed in-line with the pre-treatment step (e.g. application of an (aqueous) pre-treatment liquid) and a drying and fixing step, all performed by the same apparatus (see

Fig. 1). However, the printing process is not restricted to the above-mentioned embodiment. A method in which two or more machines are connected through a belt conveyor, drum conveyor or a roller, and the step of applying an aqueous pre-treatment liquid, the (optional) step of drying a coating solution, the step of ejecting an inkjet ink to form an image and the step or drying an fixing the printed image are performed. It is, however, preferable to carry out image formation with the above defined in-line image forming method.

### Experiments and examples

### Materials

1,4-cyclohexanedicarboxylic acid, 1,4-cyclohexanedimethanol, isophthalic acid and titanium (IV) n-butoxide were obtained from Merck. All materials were used as obtained, unless stated otherwise.

### Methods

### Determination of acid number

A dilute solution of polyester (1g) in THF (20g) is prepared. After complete dissolution, water is added (2g) together with a phenolphthalein (1 mg). For the titration, a 47% w/w solution of KOH in water is diluted with ethanol until the KOH concentration becomes 0.5% (w/w) which corresponds to 5mg KOH per gram of solution. The solution of KOH and water in ethanol is added dropwise to the solution of polymer in THF until the colorless mixture starts to switch to purple. If 4 grams of titration solution would be needed to be added to establish the change of color, the corresponding acid number of that particular polymer batch would be 20 mg_{KOH}/g_{polymer}.

### Molecular Weight (M_{N})

The Molecular weight (Mₙ) of the polyester was determined using size-exclusion chromatography (SEC).

### Glass transition temperature (Tq)

The glass transition temperature was determined using a differential scanning calorimeter (DSC).

### Experiment 1

### Production of polyester (P1)

To a round-bottom, three-necked reaction flask, 163.6 grams (0.95 mole) of 1,4-cyclohexanedicarboxylic acid, 8.3 grams (0.05 mole) of isophthalic acid and 147.1 grams (1.02 mole) of 1,4-cyclohexanedimethanol was added. The mixture was heated to a temperature of 170°C in an inert nitrogen atmosphere until the entire crystalline diacid fraction has dissolved into the molten diol fraction. Mechanical stirring was initiated and titanium (IV) n-butoxide (~0,2mL) was added as a catalyst. Subsequently the pressure was reduced, and water was removed (evaporation and condensation) as the reaction progressed.

In the early phase of the reaction a relatively large amount of water is produced. This water was removed. Over the course of the reaction, pressure was further reduced until the pressure was in the range of 10⁻¹ to 10⁻² mbar. Further, over the course of the reaction, the temperature was increased to ~250°C.

When the reaction was terminated, the polymer was poured from the reactor into a Teflon covered tray and was allowed to cool down to room temperature, yielding a colorless, glasslike material. After solidification, the polymer was crushed with a hammer and stored at ambient conditions.

The resulting polyester had an acid number of 8mg KOH/g and a M_{N} of 6593 Da. The Tg of the polyester was 38 °C.

### Experiment 2

### Production of an aqueous dispersion of a polyester (D1)

In a first vessel, 200g of a 20% (w/w) solution of polymer **P1** in methylethylketone (MEK) was placed. In a second vessel, 0.27 gram of KOH was dissolved in 0.27 gram of water. 12.9 Gram of ethanol was added to the aqueous KOH solution. The resulting KOH/water/ethanol mixture was added to the polymer solution; the mixture became slightly turbid but remained stable. The stirrer (ultraturrax) was switched on (at a rotation speed of 24 k rpm) and 800g of water was injected directly below the rotating blade at constant rate of 480ml/min using a membrane pump. The moment of phase inversion is marked by temporary increase in viscosity, a permanent change in the appearance from mildly turbid to completely opaque and a sharp rise in the electric conductivity.

Latices obtained by means of the phase inversion emulsification process were stripped from remaining solvents by heating them for ~6 hours at 95°C while stirring and while supplying a stream of dry nitrogen. Prolongation of the solvent removal step lead to evaporative loss of water which makes the dispersion more concentrated. The latex was stripped until the solid content was 24% (w/w).

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

## Claims

1. Polyester prepared from 1,4-cyclohexanedicarboxylic acid, 1,4-cyclohexanedimethanol and isophthalic acid.

2. Polyester according to claim 1, wherein the stoichiometric ratio between 1,4-cyclohexanedicarboxylic acid and isophthalic acid is in the range of 10,000:1 to 3:1.

3. Aqueous dispersion comprising a polyester according to any of claims 1 or 2.

4. Ink composition comprising a polyester according to any of claims 1 or 2.

5. Method for preparing a polyester according to claim 1, the method comprising the steps of:
a. Providing monomers, the monomers being 1,4-cyclohexanedicarboxylic acid, 1,4-cyclohexanedimethanol and isophthalic acid
b. Providing a catalyst
c. Reacting the monomers under removal of water.

6. Method for preparing an aqueous dispersion according to claim 3, the method comprising the steps of:
a. Providing a solution of the polyester according to claim 1 in an organic solvent
b. Adding water to obtain a mixture;
c. Agitating the mixture;
d. Removing water.

7. Method for preparing an ink composition, the method comprising the steps of:
a. Providing an dispersion according to claim 3;
b. Providing a colorant
c. Mixing the dispersion and the colorant

8. Method for preparing a printed article, the method providing the steps of:
a. Applying the ink composition according to claim 4 on an article.

9. Printed article, the article being prepared by the method according to claim 8.

10. Use of a polyester according to claim 1 for preparing an ink composition.
